# EUROPÄISCHE PATENTANMELDUNG

(11) **EP 3 872 943 A1**
(43) Veröffentlichungstag der Anmeldung: **01.09.2021**
(21) Anmeldenummer: 21159810.7
(22) Anmeldetag: 28.02.2021
(51) Int. Cl.: H02G 3/30, F16L 3/233, H02G 3/00

(54) **KABELHALTEVORRICHTUNG**

(30) Priorität: 29.02.2020 DE 102020105420
(71) Anmelder: Bürstner GmbH & CO. KG, 77694 Kehl (DE)
(72) Erfinder: Comtesse, Régis, 67880 Innenheim (FR); Bossert, Bruno, 67720 Hoerdt (FR); Reichlin, Rouven, 77855 Achern (DE)
(74) Vertreter: Waller, Stefan

(57) **Zusammenfassung**

Die Erfindung betrifft eine Kabelhaltevorrichtung (100) aufweisend: ein Kabelbindeelement (110) zum reversibel lösbaren Befestigen eines Kabelstranges (120), wobei ein Bündelungsdurchmesser (118) des Kabelbindeelements (110) veränderbar ist; und ein mit dem Kabelbindeelement (110) verbundenes Kopplungselement (130) zum reversibel lösbaren Befestigen der Kabelhaltevorrichtung (100) mit mindestens einer weiteren Kabelhaltevorrichtung (100), insbesondere mindestens einem Kopplungselement (130) der mindestens einen weiteren Kabelhaltevorrichtung (100). Ferner betrifft die Erfindung ein Set mit mindestens zwei solchen Kabelhaltevorrichtungen.

## Beschreibung

Die Erfindung betrifft eine Kabelhaltevorrichtung sowie ein Set bestehend aus mindestens zwei solchen Kabelhaltevorrichtungen.

Im Stand der Technik sind Kabelbinder, insbesondere wieder zu öffnende Kabelbinder für unterschiedliche Durchmesser, bekannt.

Unter einem Kabelbinder wird ein schnell zu verwendendes und preisgünstiges Verbindungselement verstanden, welches eine Vielzahl von Kabeln oder Kabelbäume aneinander oder an andere Gegenstände fixieren kann.

Im Stand der Technik sind weiterhin Kabelbinder bekannt, welche eine weitere Aufnahmestelle aufweisen, um weitere Kabeln oder Kabelbäume anzubringen.

Unter einer Kabelhaltevorrichtung wird eine Vorrichtung zum Halten von mindestens einem Kabel oder einem Kabelbaum, insbesondere ein Kabelbinder, verstanden.

Beim Verlegen von Kabeln oder Kabelbäumen taucht häufig das Problem auf, dass nicht bekannt ist, an welcher Stelle Kabel oder Kabelbäume verlegt werden sollen. Dieses Problem existiert zum Beispiel im Kraftfahrzeugbereich beim Verlegen von Kabeln oder Kabelbäumen auf dem Fahrzeugboden. Dadurch entstehen unter anderem folgende Probleme. Das Kabel oder der Kabelbaum kann auf einer Seite entweder zu kurz oder zu lang sein. Es kann ein Mehraufwand in der Produktion für die nötige Korrektur der Verlegung des Kabels oder des Kabelbaums notwendig werden. Ferner können Probleme beim Anschließen von weiterführenden Elementen oder Verbrauchern entstehen.

Eine Aufgabe der vorliegenden Erfindung liegt darin, diesen Stand der Technik zu verbessern. Es ist insbesondere eine Aufgabe der Erfindung, einen wiederverwendbaren Kabelbinder anzugeben, welcher präzise, insbesondere präzise entlang einer vorgegebenen Richtung, verlegt werden kann. Eine weitere Aufgabe der Erfindung besteht darin, bei Kabelverlegearbeiten die benötigte Kabellänge zu optimieren. Noch eine weitere Aufgabe der Erfindung besteht darin, bei Kabelverlegearbeiten eine hohe Reproduzierbarkeit zu garantieren.

Diese Aufgabe wird durch ein plattenförmiges Bauelement mit den Merkmalen des unabhängigen Patentanspruchs 1 gelöst. Vorteilhafte Weiterbildungen der Erfindung sind in den Unteransprüchen angegeben.

Das Kabelbindeelement der Kabelhaltevorrichtung dient dem Befestigen, insbesondere Haltern oder Bündeln, eines Kabelstranges. Das Kabelbindeelement kann somit ebenfalls dem Befestigen, insbesondere Haltern oder Bündeln, von Gegenständen dienen, welche einem Kabelstrang ähneln, zum Beispiel einem Rohr, in denen eine Vielzahl von Kabeln oder ein Kabelstrang verläuft.

Eine Veränderung des Bündelungsdurchmessers des Kabelbindeelements kann eine Vergrößerung oder eine Verkleinerung bedeuten.

Das Kopplungselement dient dem reversibel lösbaren Befestigen der Kabelhaltevorrichtung mit mindestens einer weiteren Kabelhaltevorrichtung, bevorzugt genau zwei Kabelhaltevorrichtungen, insbesondere mindestens einem Kopplungselement der mindestens einen weiteren Kabelhaltevorrichtung, bevorzugt genau zwei Kopplungselementen der der mindestens einen weiteren Kabelhaltevorrichtung.

Bevorzugt weist ein Kopplungselement eine erste Kopplungsstelle und eine zweite Kopplungsstelle auf.

Die erste Kopplungsstelle und die zweite Kopplungsstelle sind dergestalt, dass, falls man das Kopplungselement zwischen der ersten Kopplungsstelle und zweiten Kopplungsstelle trennt und in zwei getrennte Stücke zerlegt, die erste Kopplungsstelle mit der zweiten Kopplungsstelle reversibel lösbar verbinden kann. Bevorzugt kann man eine solche erste Kopplungsstelle nicht mit einer anderen ersten Kopplungsstelle verbinden. Bevorzugt kann man eine zweite Kopplungsstelle nicht mit einer anderen zweiten Kopplungsstelle verbinden.

Mit der erfindungsgemäßen Kabelhaltevorrichtung können vorteilhafterweise Kabelbäumen bei der Verlegung gegenseitig miteinander verbunden werden, d. h. entlang einer Reihe angeordnet werden. Ferner können Kabel oder Kabelbäume mithilfe der erfindungsgemäßen Kabelhaltevorrichtung einfacher sowie punktgenau verlegt werden.

Die erfindungsgemäße Kabelhaltevorrichtung vereinfacht vorteilhafterweise das Verlegen von Kabeln oder Kabelbäumen. Weiterhin kann dadurch eine präzise und reproduzierbare Platzierung der Kabel oder Kabelbäume erreicht werden. Darüber hinaus kann durch eine Verwendung der erfindungsgemäßen Kabelhaltevorrichtung eine Einsparung von Kabellängen erzielt werden, welche wiederum zu einer Kosten- und/oder Gewichtseinsparung führt. Bei einer Serienfertigung wird vorteilhafterweise eine identische Kabelverlegung erzielt. Weiterhin werden die Abläufe an einem Fertigungsband vereinfacht, was zu einer Zeit- und Kostenersparnis führt.

Gemäß einer bevorzugten Ausführungsform weist das Kopplungselement ein Rohr mit einem ersten Ende und einem zweiten Ende auf. Hierbei ist das erste Ende des Rohrs des Kopplungselements der Kabelhaltevorrichtung ausgeführt und eingerichtet, mit einem zweiten Ende eines Rohrs eines Kopplungselements einer weiteren Kabelhaltevorrichtung reversibel lösbar verbunden zu werden.

Ferner ist das zweite Ende des Rohrs des Kopplungselements der Kabelhaltevorrichtung bevorzugt ausgeführt und eingerichtet, mit einem ersten Ende eines Rohrs eines Kopplungselements einer weiteren Kabelhaltevorrichtung reversibel lösbar verbunden zu werden.

Bevorzugt ist das erste und zweite Ende des Rohrs des Kopplungselements so eingerichtet, dass das erste Ende des Rohrs nicht mit einem anderen ersten Ende eines Rohrs eines anderen Kopplungselements verbindbar ist sowie dass das zweite Ende des Rohrs nicht mit einem anderen zweiten Ende eines Rohrs eines anderen Kopplungselements verbindbar ist.

Dieses Merkmal erzielt vorteilhafterweise, dass Kabelbäume bei der Verlegung gegenseitig miteinander verbunden werden, d. h. entlang einer Reihe angeordnet werden können.

Bevorzugt ist das Rohr gerade. In diesem Fall wird durch dieses Merkmal vorteilhafterweise erreicht, dass die Kabel oder der Kabelbaum, welcher in dem Kabelbindeelement verläuft, entlang einer vorgegebenen Richtung präzise verlegt werden kann. Dies kann durch Ausrichtung des Rohrs einfach erreicht werden.

Gemäß einer weiteren bevorzugten Ausführungsform ist das Kopplungselement sowohl mit einem Kopplungselement einer ersten weiteren Kabelhaltevorrichtung als auch einem Kopplungselement einer zweiten weiteren Kabelhaltevorrichtung reversibel lösbar befestigbar. Dieses Merkmal erzielt vorteilhafterweise, dass Kabelbäume bei der Verlegung gegenseitig miteinander verbunden werden, d. h. entlang einer Reihe angeordnet werden können.

Gemäß noch einer weiteren bevorzugten Ausführungsform ist das erste Ende des Rohres zum Ende hin konisch zulaufend. Es weiter bevorzugt, dass das zweite Ende des Rohres eine Öffnung zur reversibel lösbaren Aufnahme des ersten Endes des Rohres aufweist.

Ferner ist es bevorzugt, dass das erste Ende des Rohres auf einer Außenseite des Rohres Lamellen aufweist. Es ist somit möglich, dass ein erstes Ende eines Rohres eines Kopplungselements in ein zweites Ende eines Rohres eines anderen Kopplungselements gesteckt wird, wodurch zwischen dem ersten Ende und dem zweiten Ende eine reversibel lösbare Befestigung besteht.

Gemäß einer anderen bevorzugten Ausführungsform weist das Kabelbindeelement ein biegsames Band und einen Binderkopf auf. Das biegsame Band weist auf einer Seite eine Vielzahl von Zähnen auf. Hierbei wird zum Befestigen des Kabelstranges das Band durch den Binderkopf gesteckt, wodurch das Band und der Binderkopf miteinander verrastet werden.

Diese Ausgestaltung kann einem herkömmlichen Kabelbinder entsprechen. Ein solcher Kabelbinder kann einen Binderkopf und ein Band aufweisen. Der Binderkopf kann eine Verbindungsdurchgangsöffnung aufweisen, die eine Raste und einen Verbindungsdurchgang aufweist. Auf der Oberseite der Raste kann eine Vielzahl von einseitigen Zähnen vorgesehen sein. Der Verbindungsdurchgang kann ein hohler Durchgang sein. Die Zähne der Raste können sich nach oben erstrecken und in den Verbindungsdurchgang eingreifen. Das Band und der Binderkopf können einteilig ausgebildet sein. Das Band kann ein feiner Streifen sein. Auf der Rückseite des Bandes kann eine Vielzahl von einseitigen, vorstehenden Zähnen ausgebildet sein. Das Band kann durch den Verbindungskanal der Verbindungsdurchgangsöffnung durchgesteckt werden. Das Distalende des Bandes kann einen Durchsteckkopf bilden, der sich verjüngt.

Beim Einsatz kann der Durchsteckkopf des Bandes um einen zu bindenden Gegenstand herum geführt werden und dann durch den Verbindungskanal der Verbindungsdurchgangsöffnung so durchgesteckt werden, dass die vorstehenden Zähne des Bandes in die einseitigen Zähne der Raste eingreifen, wodurch der Binderkopf und das Band miteinander verrastet werden.

Gemäß noch einer anderen bevorzugten Ausführungsform ist die Kabelhaltevorrichtung teilweise oder vollständig aus Kunststoff gefertigt.

Gemäß einer bevorzugten Ausführungsform weist die Kabelhaltevorrichtung ferner ein Befestigungselement zum reversibel lösbaren Befestigen der Kabelhaltevorrichtung mit einem Andockelement eines Bauteils, an oder auf welchem die Kabelhaltevorrichtung befestigbar ist, auf.

Es sei betont, dass das Andockelement nicht Teil der Kabelhaltevorrichtung ist.

Das Befestigungselement ist bevorzugt mit dem Kopplungselement verbunden oder verbindbar oder an dem Kopplungselement befestigt.

Bevorzugt sind das Befestigungselement zum reversibel lösbaren Befestigen der Kabelhaltevorrichtung mit einem Andockelement und das Kabelbindeelement der Kabelhaltevorrichtung auf unterschiedlichen Seiten des Kopplungselements angeordnet, bevorzugt an sich gegenüberliegenden Seiten des Kopplungselements. In letzterem Fall bildet das Befestigungselement, mithilfe dessen die Kabelhaltevorrichtung an einem zu befestigenden Gegenstand befestigt wird, mit dem Kopplungselement und dem Kabelbindeelement eine Linie. Hierdurch wird vorteilhafterweise erreicht, dass jeweils nebeneinander angeordnete Kabelhaltevorrichtungen parallel zueinander angeordnete Linien bilden, welche von zum Beispiel einem Boden senkrecht nach oben verlaufen und der zu verlegende Kabelstrang senkrecht zu diesen Linien, zum Beispiel horizontal, verlegt werden kann. Nebeneinander angeordnete Kabelhaltevorrichtungen können hierbei so entlang einer Richtung ausgerichtet werden, dass nebeneinander verlegte Kabelstränge parallel zueinander und senkrecht zur Ausrichtungsrichtung verlaufen. Hierdurch können nebeneinander verlegte Kabel identisch nebeneinander angeordnet werden, sodass die Verlegung ordentlich und klar erfolgt. Sowohl der Arbeiter, der die Kabelstränge verlegt, als auch einen Techniker, der einen Fehler in einem solchen Kabelbaum finden muss, kann sich somit in den Kabelsträngen einfach und gut zurechtfinden.

Bevorzugt ist das Befestigungselement an einer Außenseite des Kopplungselements, insbesondere des Rohres, angeordnet. Hierbei ist es bevorzugt, dass das Befestigungselement und das Kabelbindeelement auf gegenüberliegenden Seiten des Rohres angeordnet sind.

Das Befestigungselement ist bevorzugt eine Kappe oder ein Stopfen, insbesondere ein Schraubstopfen, ein Stopfen mit Lamellen.

Der Schraubstopfen kann bevorzugt ein Vollgewinde aufweisen und/oder eine Push-fit-Ausführung für eine schnelle Montage sein.

Bevorzugt ist die Kappe oder der Stopfen aus Kunststoff gefertigt. Bevorzugt kann das Befestigungselement einen sogenannten Tannenbaumfuß aufweisen, welcher Außenlamellen aufweist und am Ende sich verjüngt.

Das Andockelement ist bevorzugt eine in dem Bauteil angeordnete Bohrung, insbesondere mit Innengewinde und/oder mit einer farblichen Markierung.

Durch die Bohrung wird vorteilhafterweise erreicht, dass die Kabelhaltevorrichtung präzise verlegbar ist.

Das Befestigungselement ist bevorzugt so ausgeführt, dass es in oder an dem Andockelement reversibel lösbar befestigbar ist. Bevorzugt weist das Befestigungselement ein Außengewinde auf, welches in ein Innengewinde des Andockelements einschraubbar ist. Gemäß einer anderen Ausführungsform kann das Befestigungselement in das Andockelement reversibel lösbar eingesteckt werden.

Bevorzugt weist das Andockelement eine Bohrung auf, in welcher eine Kappe einer vorgegebenen Farbe angeordnet werden kann, in welche das Befestigungselement, zum Beispiel in Form eines Stopfens oder eines Schraubstopfen, gesteckt werden kann.

Das Andockelement kann farblich markiert sein. Diese farbliche Markierung bewirkt vorteilhafterweise, dass ein Pfad, entlang dem ein Kabelstrang zu verlegen ist, für einen Arbeiter einfach erkennbar ist. Die farbliche Markierung kann zum Beispiel eine Kappe einer vorgegebenen Farbe sein, welche in einer Bohrung in dem Andockelement angeordnet ist.

Das Bauteil, an oder auf welchem die Kabelhaltevorrichtung befestigbar ist, ist bevorzugt, eine Platte, insbesondere eine Bodenplatte, eine Wandplatte oder eine Deckenplatte. Die Kabelhaltevorrichtung ist somit bevorzugt in einem Boden, einer Wand oder einer Decke befestigbar. Der Boden, die Wand oder die Decke können zum Beispiel in einem Fahrzeug oder in einer Fabrik angeordnet sein.

Die Kabelhaltevorrichtung kann bevorzugt um das Befestigungselement drehbar sein. Hierdurch wird vorteilhafterweise erreicht, dass die Kabelhaltevorrichtung, insbesondere das Kopplungselement und/oder das Kabelbindeelement, entlang einer vorgegebenen Richtung ausgerichtet werden kann. Hierdurch kann das Befestigungselement beispielsweise in Styropor oder Holzböden in einfacher Art und Weise gedreht werden. Hierzu kann das Befestigungselement vorteilhafterweise einen Tannenbaumfuß aufweisen.

In einem weiteren Aspekt wird die Erfindung gelöst durch ein Set mit mindestens zwei oben beschriebenen Kabelhaltevorrichtungen.

Ausführungsbeispiele der Erfindung sind in den Zeichnungen dargestellt und werden in der nachfolgenden Beschreibung näher erläutert.

Figuren 1 bis 4 zeigen jeweils unterschiedliche Ausführungsformen einer erfindungsgemäßen Kabelhaltevorrichtung;
Figur 5 und 6 zeigen jeweils zwei miteinander verbundene Kabelhaltevorrichtungen.

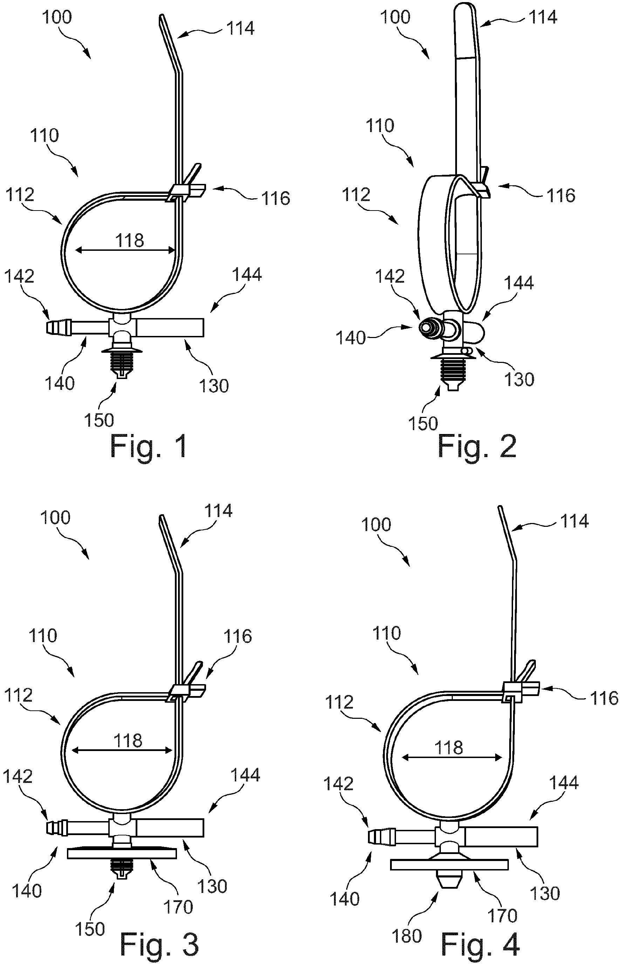

Figur 1 zeigt eine erste Ausführungsform einer aus Kunststoff gefertigten Kabelhaltevorrichtung 100. Die Kabelhaltevorrichtung 100 weist ein Kabelbindeelement 110, ein mit dem Kabelbindeelement 110 verbundenes Kopplungselement 130 sowie ein mit dem Kopplungselement 130 verbundenes Befestigungselement 150 auf.

Das Kabelbindeelement 110 dient dem reversibel lösbaren Befestigen eines nicht abgebildeten Kabelstranges, wobei ein Bündelungsdurchmesser 118 des Kabelbindeelements 110 veränderbar ist.

Das Kabelbindeelement 110 weist ein biegsames Band 112 sowie einen Binderkopf 116 auf.

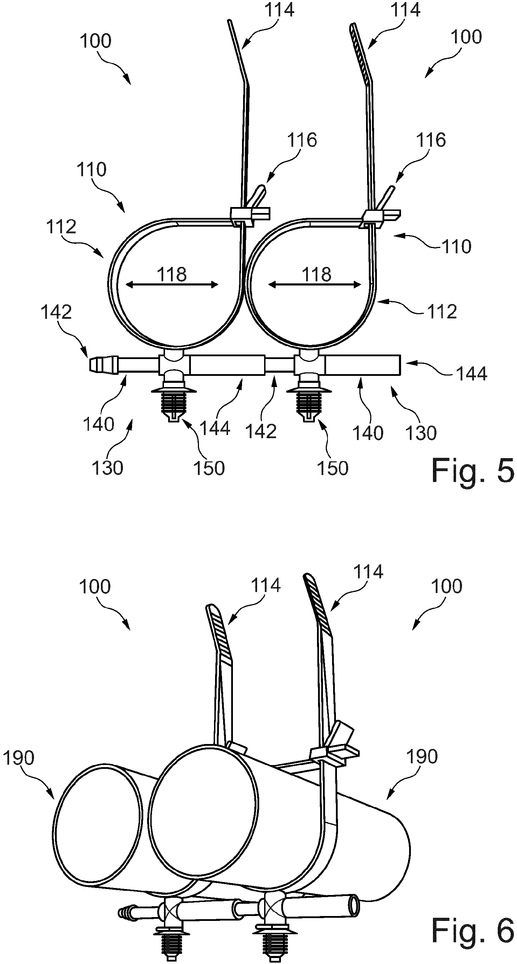

Das Band 112 weist auf einer Seite eine Vielzahl von Zähnen 114 auf. Die Vielzahl von Zähnen 114 ist in Figur 6 abgebildet, in welcher zwei identische Kabelhaltevorrichtungen 100 miteinander verbunden abgebildet sind.

Der Kabelstrang wird von dem biegsamen Band 112 umgriffen. Zum Befestigen des Kabelstranges wird das Band 112 durch den Binderkopf 116 gesteckt, wodurch das Band 112 und der Binderkopf 116 miteinander verrastet werden und das Band 112 um den Kabelstrang herum festgezogen werden kann. Durch Betätigen des Binderkopfes 116 kann das Band 112 aus dem Binderkopf herausgezogen werden, wodurch das Band 112 um den Kabelstrang gelockert wird, sodass der Kabelstrang von der Kabelhaltevorrichtung 100 entfernt werden kann.

Das Kopplungselement 130 dient dem reversibel lösbaren Befestigen der Kabelhaltevorrichtung 100 mit einem oder zwei weiteren Kabelhaltevorrichtungen 100.

Das Kopplungselement 130 weist ein Rohr 140 mit einem ersten Ende 142 und einem zweiten Ende 144 auf, wobei das erste Ende 142 des Rohrs 140 des Kopplungselements 130 mit einem zweiten Ende 144 eines Rohrs 140 eines Kopplungselements 130 einer weiteren Kabelhaltevorrichtung 100 reversibel lösbar verbunden werden kann und das zweite Ende 144 des Rohrs 140 des Kopplungselements 130 mit einem ersten Ende 142 eines Rohrs 140 eines Kopplungselements 130 einer weiteren Kabelhaltevorrichtung 100 reversibel lösbar verbunden werden kann.

Das Kopplungselement 130 weist an einer Außenseite in der Mitte zwischen dem ersten Ende 142 und dem zweiten Ende 144 ein kurzes, senkrecht zum Rohr 140 verlaufendes Rohrstück auf, an dessen Ende eine Außenseite des Bandes 112 befestigt ist. Der Durchmesser des Rohrstückes ist ungefähr gleich groß wie der Durchmesser des Rohres 140.

Das erste Ende 142 des Rohres 140 läuft zum Ende hin konisch zu und weist auf einer Außenseite des Konus Lamellen auf. Das zweite Ende 142 des Rohres 140 weist eine Öffnung zur reversibel lösbaren Aufnahme des ersten Endes 142 des Rohres 140 auf. Das erste Ende 142 des Rohres 140 des Kopplungselements 130 kann in das zweite Ende 144 des Rohres 140 eines anderen Kopplungselements 100 gesteckt wird, wodurch zwischen dem ersten Ende 142 und dem zweiten Ende 144 eine reversibel lösbare Befestigung besteht. Aufgrund dieser Eigenschaft des Rohres 140 können mehrere identische Kabelhaltevorrichtung 100 entlang einer Richtung aufgereiht werden, wie in Figur 5 und 6 dargestellt. Figur 5 zeigt zwei miteinander verbundene Kabelhaltevorrichtungen 100, wobei ein erstes Ende 142 eines Rohres 140 der in Figur 5 rechts abgebildeten Kabelhaltevorrichtung 100 in einem zweiten Ende 144 eines Rohres 140 der in Figur 5 links abgebildeten Kabelhaltevorrichtung 100 reversibel lösbar befestigt ist. Figur 6 zeigt dieselbe Ausführungsform wie in Figur 5 in einer dreidimensionalen Ansicht von unten, wobei in dem jeweiligen Kabelbindeelement 110 der Kabelhaltevorrichtungen 100 jeweils ein Rohr 190 reversibel lösbar befestigt ist.

Senkrecht zu der oben angegebenen Anreihungs-Richtung verlaufen die Kabelstränge einer jeweiligen Kabelhaltevorrichtung 100.

Das Befestigungselement 150 dient dem reversibel lösbaren Befestigen der Kabelhaltevorrichtung 100 mit einem Andockelement eines Bauteils 170, an oder auf welchem die Kabelhaltevorrichtung 100 befestigbar ist.

Das Befestigungselement 150 ist ein Schraubstopfen mit einem Außengewinde. Ein solches Bauteil kann alternativ auch Tannenbaumfuß genannt werden. Das Befestigungselement 150 ist an einem weiteren kurzen, ebenfalls senkrecht zum Rohr 140 verlaufenden, Rohrstück befestigt. Das weitere kurze Rohrstück fluchtet mit dem ersten kurzen Rohrstück, an dem das Kabelbindeelement 110 befestigt ist, und befindet sich auf der gegenüberliegenden Seite des Rohres 140. Der Durchmesser des weiteren kurzen Rohrstückes ist ebenfalls ungefähr gleich dem Durchmesser des Rohres 140.

In Figur 2 ist eine dreidimensionale Ansicht der Ausführungsform der Kabelhaltevorrichtung 100 aus Figur 1 dargestellt, wobei die Kabelhaltevorrichtung 100 nahezu parallel zu einer Richtung vom ersten Ende 142 zum zweiten Ende 144 des Rohres 140 zu sehen ist.

In Figur 3 ist eine weitere Ausführungsform der Kabelhaltevorrichtung 100 abgebildet, welche mit dem Befestigungselement 150 an einem Andockelement eines Bauteils 170 befestigt ist. Das Bauteil 170 kann zum Beispiel eine Bodenplatte sein, auf der ein Kabelstrang verlegt werden soll. Die Bodenplatte kann zum Beispiel eine Bohrung mit Innengewinde aufweisen, in welche das Außengewinde des Befestigungselements 150 geschraubt werden kann. Die Kabelhaltevorrichtung 100 der Figur 3 unterscheidet sich bis auf das Bauteil 170 nicht von der Ausführungsform der Figur 1.

Die Ausführungsform der Figur 4 unterscheidet sich von der Ausführungsform der Figur 3 lediglich durch ein farbiges Andockelement, welches zum Beispiel in einer Bohrung in dem Bauteil 170 oder im Boden angeordnet sein kann. Das farbige Andockelement kann ferner einen Innengewinde aufweisen, sodass ein Außengewinde des Befestigungselements 150 in dieses schraubbar ist.

## Patentansprüche

1. Kabelhaltevorrichtung (100) aufweisend:
ein Kabelbindeelement (110) zum reversibel lösbaren Befestigen eines Kabelstranges (120), wobei ein Bündelungsdurchmesser (118) des Kabelbindeelements (110) veränderbar ist, und
ein mit dem Kabelbindeelement (110) verbundenes Kopplungselement (130) zum reversibel lösbaren Befestigen der Kabelhaltevorrichtung (100) mit mindestens einer weiteren Kabelhaltevorrichtung (100), insbesondere mindestens einem Kopplungselement (130) der mindestens einen weiteren Kabelhaltevorrichtung (100).

2. Kabelhaltevorrichtung (100) nach Anspruch 1,
**dadurch gekennzeichnet, dass**
das Kopplungselement (130) ein Rohr (140) mit einem ersten Ende (142) und einem zweiten Ende (144) aufweist, wobei das erste Ende (142) des Rohrs (140) des Kopplungselements (130) der Kabelhaltevorrichtung (100) ausgeführt und eingerichtet ist, mit einem zweiten Ende (144) eines Rohrs (140) eines Kopplungselements (130) einer weiteren Kabelhaltevorrichtung (100) reversibel lösbar verbunden zu werden.

3. Kabelhaltevorrichtung (100) nach Anspruch 1 oder 2,
**dadurch gekennzeichnet, dass**
das Kopplungselement (130) sowohl mit einem Kopplungselement (130) einer ersten weiteren Kabelhaltevorrichtung (100) als auch einem Kopplungselement (130) einer zweiten weiteren Kabelhaltevorrichtung (100) reversibel lösbar befestigbar ist.

4. Kabelhaltevorrichtung (100) nach Anspruch 2 oder 3,
**dadurch gekennzeichnet, dass**
das erste Ende (142) des Rohres (140) zum Ende hin konisch zulaufend ist und
das zweite Ende (142) des Rohres (140) eine Öffnung zur reversibel lösbaren Aufnahme des ersten Endes (142) des Rohres (140) aufweist.

5. Kabelhaltevorrichtung (100) nach einem der vorangegangenen Ansprüche,
**dadurch gekennzeichnet, dass**
das Kabelbindeelement (110) ein biegsames Band (112), welches auf einer Seite eine Vielzahl von Zähnen (114) aufweist, und einen Binderkopf (116) aufweist; wobei zum Befestigen des Kabelstranges (120) das Band (112) durch den Binderkopf (116) gesteckt wird, wodurch das Band (112) und der Binderkopf (116) miteinander verrastet werden.

6. Kabelhaltevorrichtung (100) nach einem der vorangegangenen Ansprüche,
**dadurch gekennzeichnet, dass**
die Kabelhaltevorrichtung (100) teilweise oder vollständig aus Kunststoff gefertigt ist.

7. Kabelhaltevorrichtung (100) nach einem der vorangegangenen Ansprüche,
**ferner aufweisend:**
ein mit dem Kopplungselement (130) verbundenes Befestigungselement (150) zum reversibel lösbaren Befestigen der Kabelhaltevorrichtung (100) mit einem Andockelement eines Bauteils (170), an oder auf welchem die Kabelhaltevorrichtung (100) befestigbar ist.

8. Kabelhaltevorrichtung (100) nach dem vorangegangenen Anspruch,
**dadurch gekennzeichnet, dass**
das Befestigungselement (150) an einer Außenseite des Kopplungselements (130), insbesondere des Rohres, angeordnet ist.

9. Kabelhaltevorrichtung (100) nach Anspruch 7 oder 8,
**dadurch gekennzeichnet, dass**
das Befestigungselement (150) eine Kappe oder ein Stopfen, insbesondere ein Schraubstopfen, ein Stopfen mit Lamellen, ist.

10. Kabelhaltevorrichtung (100) nach Anspruch 7, 8 oder 9,
**dadurch gekennzeichnet, dass**
das Andockelement eine in dem Bauteil (170) angeordnete Bohrung, insbesondere mit Innengewinde und/oder mit einer farblichen Markierung, ist.

11. Kabelhaltevorrichtung (100) nach einem der Ansprüche 7 bis 10,
**dadurch gekennzeichnet, dass**
das Bauteil, an oder auf welchem die Kabelhaltevorrichtung (100) befestigbar ist, eine Platte, insbesondere eine Bodenplatte, eine Wandplatte oder eine Deckenplatte, ist.

12. Set aufweisend mindestens zwei Kabelhaltevorrichtungen (100) nach einem der vorangegangenen Ansprüche.
